Europäisches Patentamt

European Patent Office

Office européen des brevets

(11) Publication number: **0 256 744**
**A1**

(12) **EUROPEAN PATENT APPLICATION**

(21) Application number: 87306878.7

(22) Date of filing: 04.08.87

(51) Int. Cl.⁴: **A01M 7/00** , B05B 9/08

(30) Priority: 07.08.86 GB 8619333

(43) Date of publication of application:
24.02.88 Bulletin 88/08

(84) Designated Contracting States:
AT BE CH DE ES FR GR IT LI LU NL SE

(71) Applicant: **Nomix Manufacturing Co. Limited**
**Fillwood Factory Charlton Road**
**Kingswood Bristol BS15 1HB(GB)**

(72) Inventor: **Gill, David Charles**
**Wellfield House Parkhouse Lane**
**Keynsham Bristol BS18 2SG(GB)**

(74) Representative: **Cheyne, John Robert**
**Alexander Mackenzie et al**
**HASELTINE LAKE & CO. 28 Southampton**
**Buildings Chancery Lane**
**London WC2A 1AT(GB)**

(54) Maintenance of a desired pedestrian speed.

(57) Pedestrian operated plant treatment equipment, such as hand-held spraying equipment for a herbicide or the like, comprises a device for use in assisting the maintenance of a desired pedestrian speed, the device comprising means (8) for emitting an auible output signal at an output frequency to serve as a guide for maintaining a desired striding rate. The output frequency is adjustable on the basis of the desired pedestrian speed and of a stride length of the pedestrian.

FIG. 2.

EP 0 256 744 A1

# MAINTENANCE OF A DESIRED PEDESTRIAN SPEED

This invention relates to maintenance of a desired speed by a pedestrian.

It is known, for example from British Patent No. 2131327 and British Patent Application No. 8407163 (Publication No. 2,157,025A), to apply materials such as herbicides by means of equipment which is either carried by a pedestrian, or moved over the ground under the control of the pedestrian. The flow rate of the herbicide is carefully controlled in order to achieve a desired area density of the material over the ground to be treated. However, the area density of material depends not only upon the flow rate, but also upon the travel speed of the equipment, and therefore on the walking speed of the operator. With the known equipment, the operator must try to keep to the required walking speed, but this is not easy to do.

European patent publication EP-A-0143588 discloses a liquid spraying device which has a control unit, the control unit indicating when the sensed speed of the device is greater than, or less than, an input desired speed. However, this control unit is suitable only for use with wheeled spraying devices and, moreover, relies upon being able to measure accurately the speed of a wheeled vehicle across uneven and overgrown terrain of the type to which it is often necessary to apply a herbicide.

According to the present invention there is provided pedestrian operated plant treatment equipment, comprising a device for use in assisting the maintenance of a desired pedestrian speed, the device comprising means for emitting an audible output signal at an output frequency to serve as a guide for maintaining a desired striding rate.

In a preferred embodiment, the signal comprises a regular series of audible pulses, the frequency of which corresponds to the striding rate to be maintained. Alternatively, the pulses may be admitted at a higher frequency, with a stride being completed on, for example, every fourth pulse.

The equipment may advantageously be adapted for delivering herbicide at a controlled flow rate.

The device may be mounted internally in the plant treatment equipment. Alternatively, the device may be mounted externally, perhaps in a releasable manner. Where the equipment is provided with a battery having an electrical connector for connection to a mains supply to recharge the battery, the device may be fitted to the equipment by engaging it with the electrical connector. The device may have its own source of current, but alternatively it may be adapted to draw current from the battery of the spraying equipment.

The frequency of the signal is preferably adjustable. Such adjustment may be provided not only in order to enable the pedestrian to maintain different speeds, but also to adapt the signal to the actual length of each stride taken by the pedestrian. Thus, if a desired speed is to be maintained, the frequency of the signal will need to be higher for a person who takes relatively short strides than it would need to be for a person who takes relatively long strides. One method of calibrating the device is for the pedestrian to walk over a predetermined distance, for example 20 metres, and to count the number of steps taken. The number of steps taken can be used to derive a calibration factor which can be set on the device to obtain a signal of the desired frequency.

The device may comprise a control member such as a multi-position switch, which is operable to alter the frequency of the signal. For example, each output of the switch may be connected to a signal generator through a respective resistor or combination of resistors. The resistors may be chosen, for example, to give signals corresponding to walking speeds of 2.4km/h(1.5mph), 3.2km/h(2.0 mph), 4.0 km/h(2.5mph) and 4.8km/h(3.0mph), assuming a predetermined length of stride. There may be provision for adjusting the variable resistors to correct the frequency of the signal for different lengths of stride. Alternatively, the multi-position switch could have a further output connected to a variable resistor which can be adjusted to give any desired walking speed with any length of stride. The variable resistors corresponding to the fixed speeds may then be replaced by resistors having appropriate fixed values.

For a better understanding of the present invention, and to show how it may be carried into effect, reference will now be made, by way of example, to the accompanying drawings, in which:-

Figure 1 shows plant treatment equipment according to one aspect of the present invention;

Figure 2, to a larger scale, shows the handle of the equipment shown in Figure 1;

Figure 3 is a sectional view of one part of the handle shown in Figure 2; and

Figure 4 is an electronic circuit diagram of a device in accordance with another aspect of the present invention.

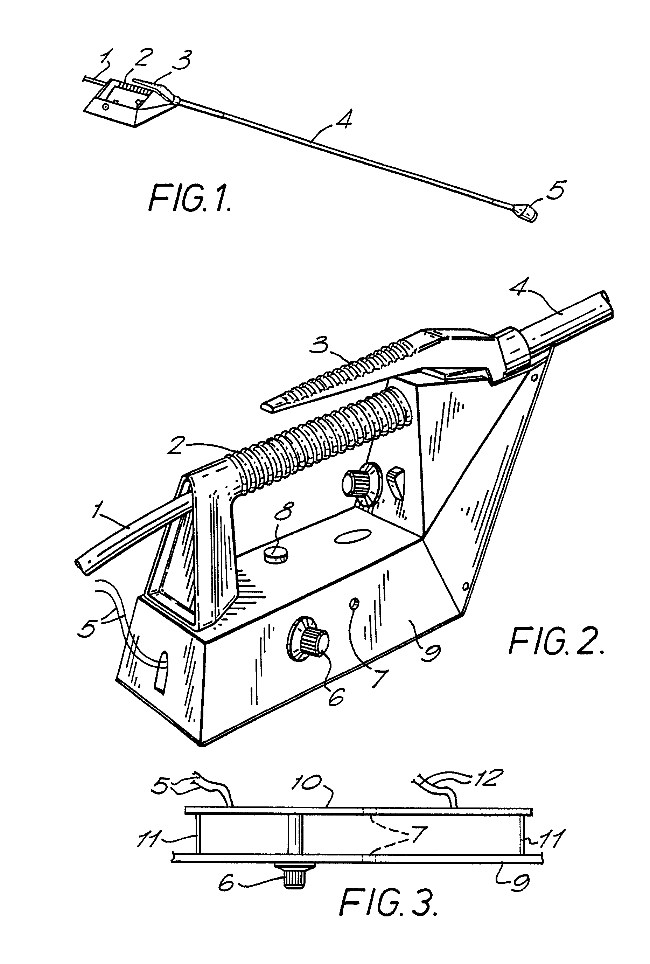

Figure 1 shows equipment for distributing a fluid over an area of land, to which the fluid is supplied via an inlet duct 1. The equipment is adapted to be held by a pedestrian operator, and includes a handset for this purpose, incorporating a handle 2. The handle is provided with means for controlling the rate of flow of fluid, such that when the upper part 3 of the handle is squeezed against the remainder of the body of the handle, fluid is allowed to flow along a duct 4 towards a fluid distributing head 5, which is provided with a spinning disc which causes the fluid to be evenly distributed over an area of land.

As shown in Figure 2, the handle 2 is provided with electric leads 5 for connection to a power source, and has a rotary switch 6, a jack socket 7, and an externally mounted sounder 8 provided on the body thereof.

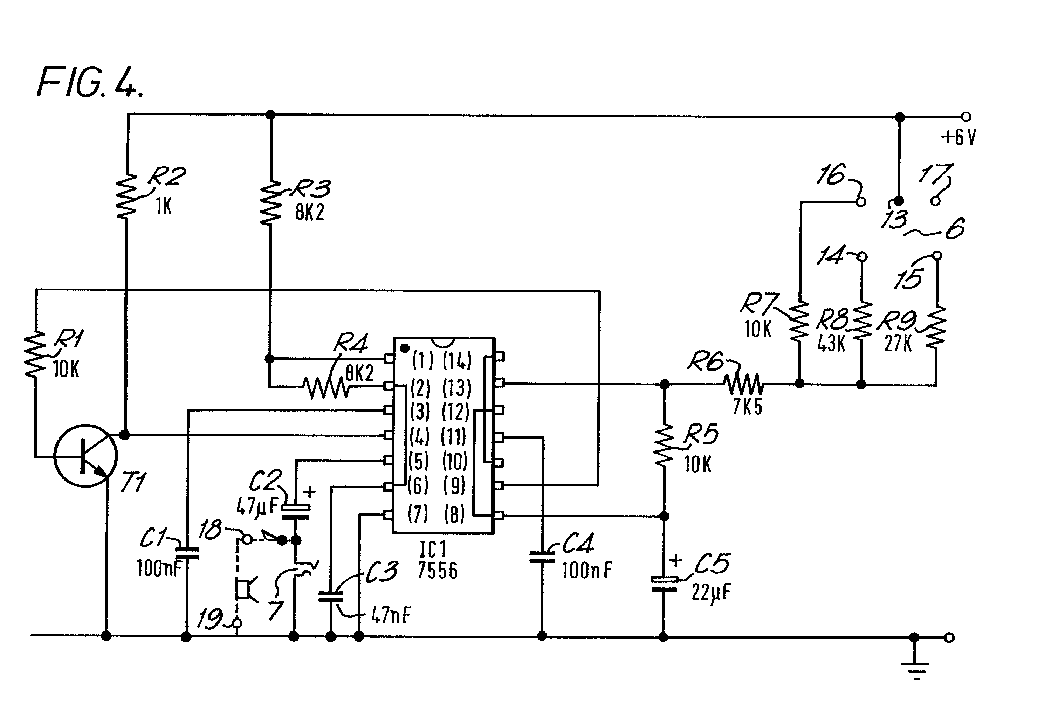

Figure 3 is a sectional view of a side surface 9 of the handle 2, showing an electronic circuit board 10 mounted to the inner surface thereof by pins 11. The circuit board has electrical connections 5, 12 to the power source and to the sounder 8 respectively.

The electrical power source, which may conveniently be a battery, may be accommodated in the handset, or may be carried by a pedestrian operator of the equipment in a back-pack which also contains the fluid which is to be distributed.

Figure 4 shows the electronic circuitry which may be mounted to the circuit board 10. The switch 6 is a BCD type, which is used to set the desired pedestrian speed. The switch 6 has a common contact 13 and four other contacts 14, 15, 16, 17. The set position of the switch 6 controls the input voltage which is passed to the intergrated circuit IC1, which is a CMOS 556 timer, one section of which is configured as an audio oscillator. Thus, an output audible tone is produced at a required frequency since this oscillator is switched on and off at the required rate by the second oscillator. The circuitry has connections 18, 19 for a remotely located piezo sounder, and a jack socket 7, which may be used to supply the audible output tone to, for example, a set of headphones which may be worn by the operator of the equipment.

In the embodiment of the invention illustrated in Figure 4, four output frequencies are available. In the first position, the common contact 13 is connected to the first contact 14; in the second postion, the common contact 13 is connected to the second contact 15; in the third position, the common contact 13 is connected to both the first contact 14 and second contact 15; and in the fourth position, the common contact 13 is connected to the third contact 16. When the common contact 13 is connected to the fourth contact 17, the power supply is open circuit, and thus the timer intergrated circuit IC1 is disabled, although the power supply is not disconnected. As the integrated circuit draws minimal power when not connected, it is not necessary to provide a further power switch.

Changing the position of the switch causes the input voltage to the integrated circuit IC1 to be varied, and hence results in a change of the output frequency of the audible signal. The four available output positions correspond to pedestrian speeds of 2.4km/h(1.5 mph), 3.2km/h(2.0 mph), 4.0km/h(2.5 mph) and 4.8km/h(3.0 mph). A constant stride length of 0.76m (30 inches) is assumed, and so the four switch positions correspond to output frequencies of 0.88Hz, 1.17Hz, 1.46Hz and 1.76Hz respectively.

Where the spraying equipment is provided with one or more wheels and is intended to be pushed or drawn over the ground by a pedestrian operator, the equipment may include means for providing an indication of travel speed. Such means may be operated from one of the wheels, for example in the manner disclosed in British Patent Application No. 8407163 (Publication No. 2,157,025A). Speed indication may be provided by a needle moving over a scale. The operator would then walk at a speed which keeps the needle in the appropriate position on the scale. Once this position is reached, the operator could adjust the signal generating device so that the frequency of the signal is coordinated to the strides taken by the operator. Thenceforth, the signal would aid the operator in maintaining the desired speed without the need for him to look constantly at the needle.

**Claims**

1. Pedestrian operated plant treatment equipment, characterised in that the equipment comprises a device for use in assisting the maintenance of a desired pedestrian speed, the device comprising means (8) for emitting an audible output signal at an output frequency to serve as a guide for maintaining a desired striding rate.

2. Equipment as claimed in claim 1, further comprising input means (6), whereby a desired pedestrian speed may be input into the device, the output frequency being adjusted on the basis of the desired pedestrian speed and of a stride length of the pedestrian.

3. Equipment as claimed in claim 2, wherein the stride length of the pedestrian, on the basis of which the output frequency is calculated, is built into the device.

4. Equipment as claimed in claim 1, 2 or 3, comprising spraying means for distributing a fluid over an area of land.

5. Equipment as claimed in claim 4, wherein the spraying means comprises a spinning disc, to which the fluid may be supplied.

6. Equipment as claimed in any preceding claim, comprising a handset and a spray head (5) which are connected by an elongate support member (4).

FIG.1.

FIG.2.

FIG.3.

# FIG. 4.

0 256 744

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 143 588  (B. MONTANDON) * Page 1, line 28 - page 2, line 9; page 5, line 33 - page 6, line 10; figures 1,4 * | 1-4 | A 01 1  M7/00 B 05 B   9/08 |
| | --- | | |
| Y | GB-A- 432 873  (C. PAPE) * Page 1, lines 7-30 * | 1-4 | |
| | --- | | |
| A | FR-A-2 266 450  (M.C.J. LESTRADET) * Page 8, lines 23-38 * | 1,3,4 | |
| | --- | | |
| D,A | EP-A-0 155 850  (D.C. GILL) | | |
| | --- | | |
| D,A | EP-A-0 110 713  (D.C. GILL) | | |
| | ----- | | |

TECHNICAL FIELDS
SEARCHED (Int. Cl.4)

A 01 M
B 05 B
G 04 F

The present search report has been drawn up for all claims

| Place of search | Date of completion of the search | Examiner |
|---|---|---|
| THE HAGUE | 05-10-1987 | NEHRDICH H.J |